# EUROPEAN PATENT APPLICATION

(11) **EP 2 426 733 A1**
(43) Date of publication of application: **07.03.2012**
(21) Application number: 10175463.8
(22) Date of filing: 06.09.2010
(51) Int. Cl.: H01L 31/048

(54) **Device for providing a housing for an electrical connection**

(71) Applicant: Applied Materials, Inc., Santa Clara, CA 95054 (US)
(72) Inventor: Repmann, Tobias, 63755, Alzenau (DE)
(74) Representative: Zimmermann & Partner

(57) **Abstract**

The present disclosure relates to a device (12, 22, 120) for providing a housing for an electrical connection between electrical contact terminals (108, 110) of a photovoltaic module (100) and at least one cable (140, 142, 144), comprising at least one elastic element (136) for a releasable connection for connecting and retaining the device to the photovoltaic module. Further, the disclosure relates to a photovoltaic module assembly (100, 120) comprising: a photovoltaic module (100) comprising at least one electrical contact terminal (108, 110) and at least one releasable connection member (114); and a device (120) for providing a housing for an electrical connection between the at least one electrical contact terminals and at least one cable, including at least one releasable connection member (136, 138) for connecting and retaining the device to the photovoltaic module; wherein the at least one releasable connection member of the photovoltaic module cooperates with the releasable connection member of the device for retaining the device on the photovoltaic module. Additionally, the present disclosure relates to a method for mounting a device for providing a housing for an electrical connection between at least one electrical contact terminal (108, 110) of a photovoltaic module and at least one cable (140, 142, 144) on a photovoltaic module comprising the at least one electrical contact terminal, the method comprising: providing the device (120); providing the photovoltaic module (100); and mechanically engaging the device on the photovoltaic module with an elastic element for a releasable connection.

## Description

The present disclosure relates to a device for providing a housing for an electrical connection between electrical contact terminals of a photovoltaic module and at least one cable. Further, the present disclosure relates to a photovoltaic module assembly. Additionally, the present disclosure relates to a method for mounting a device for providing a housing for an electrical connection between at least one electrical contact terminal of a photovoltaic module and at least one cable on a photovoltaic module including the at least one electrical contact terminal.

### BACKGROUND

Typically, the output voltage of an individual photovoltaic module is generally too low to operate electrical devices. Thus, several photovoltaic modules are interconnected, for example by a serial connection. To be connected to external wires, the photovoltaic modules have terminals. For example, the wires may be brazed to the terminals of the photovoltaic module.

Typically, the wires are routed into a junction box which covers the terminals of the photovoltaic modules. This junction box is mounted by gluing. Therefore, either hot melts or other types of adhesives are used. For example, the junction box may be filled with a pottant to make the photovoltaic module junction box water tight.

Typically, it is required that a junction box is water tight to pass a wet-leakage test if it is to be classified for International protection rating IP67 according to the norms IEC 60529 or DIN 40050-9 . Further, it is also required, that the junction box is easy to mount and that it may be automatically mounted on a photovoltaic module.

### SUMMARY

In light of the above, a device for providing a housing for an electrical connection between electrical contact terminals of a photovoltaic module and at least one cable according to independent claim 1, a photovoltaic module assembly according to independent claim 13, and a method for mounting a device for providing a housing for an electrical connection between at least one electrical contact terminal of a photovoltaic module and at least one cable on a photovoltaic module comprising the at least one electrical contact terminal are provided. According to one aspect, a device for providing a housing for an electrical connection between electrical contact terminals of a photovoltaic module and at least one cable is provided, including at least one elastic element for a releasable connection for connecting and retaining the device to the photovoltaic module.

Thus, the device can be easily fixed on a photovoltaic module. Further, the time for fixing the device to a photovoltaic module may be reduced. This may save time in an automatic production process of photovoltaic modules.

In an embodiment, the device includes a circumferential recess for an O-ring for sealing the interior of the device, the electrical contact terminals and/or a cut out of the photovoltaic module from the exterior of the device. In a further embodiment, a circumferential recess may be provided to seal an opening in a back layer of a photovoltaic module and/or a cut-out of the photovoltaic module against fluid accessing the opening in the back layer through a space between the device and the photovoltaic module.

For example the circumferential recess may be circular or may have any other form. The circumferential recess may be disposed such that, when the device is fixed on a photovoltaic module or photovoltaic module and an O-ring is disposed in the recess, the exterior of the device is sealed from the interior. Thus, a water-tight seal is realizable.

According to a further embodiment, which may be combined with other embodiments disclosed herein, the at least one elastic element is an element of a pair of mating catches, in particular selected of the group consisting of: a catch, a catch recess, a latching lug, and a latch recess.

In an embodiment, the device further includes a support surface, in particular a substantially planar support surface, the support surface having at least one opening, wherein the releasable connection member is connected to the support surface. For example, in an embodiment, the circumferential recess is provided around the at least one opening.

For example, in an embodiment, the at least one releasable connection member is adapted for a connection to the photovoltaic module through the at least one opening.

According to a further embodiment, the recess for the O-ring is arranged in the support surface.

For example, in a further embodiment, at least one electrical spring contact element, in particular at least two electrical spring contact elements, for connecting a wire to a contact terminal of the photovoltaic module through the at least one opening is provided.

In another embodiment, at least one releasable connection member and the at least one electrical spring element are integrally formed. Thus, the number of elastic members of the device can be reduced.

According to a further aspect, a photovoltaic module assembly is provided including: a photovoltaic module including at least one electrical contact terminal and at least one releasable connection member; and a device for providing a housing for an electrical connection between the at least one electrical contact terminals and at least one cable, including at least one releasable connection member for connecting and retaining the device to the photovoltaic module; wherein the at least one releasable connection member of the photovoltaic module cooperates with the releasable connection member of the device for retaining the device on the photovoltaic module.

According to an embodiment, the at least one electrical contact terminal is connected to an active layer converting electromagnetic radiation into a voltage. For example, the active layer may include a semiconductor junction.

In an embodiment, the photovoltaic module further includes a back surface layer; and a back surface layer opening formed in the back surface layer to provide access to the at least one electrical contact terminal of the photovoltaic module, wherein the device covers the back surface layer opening.

For example, in an embodiment, the releasable connection member of the photovoltaic module is disposed in the back surface layer opening.

In an embodiment, which may be combined with other embodiments, the back surface layer opening having an opening surface, wherein the opening surface includes the at least one releasable connection member of the photovoltaic module, wherein, in particular, the at least one releasable connection member is at least one recess and/or protrusion to provide a female portion of a snap-in connection and/or a hook for a snap-in connection.

For example, in an embodiment, a circumferential recess formed in the support surface of the device surrounds the back surface layer opening.

In an embodiment, an O-ring is disposed in the circumferential recess of the device.

For example, in an embodiment, the at least one releasable connection member of the device and the at least one releasable connection member of the photovoltaic module device engage each other respectively, so that the support surface of the device is pressed onto the back surface layer of the photovoltaic module and/or an electrical connection between the at least one electrical contact element of the device and the at least one electrical terminal contact is provided.

According to a further aspect, a method is provided for mounting a device for providing a housing for an electrical connection between at least one electrical contact terminal of a photovoltaic module and at least one cable on a photovoltaic module including the at least one electrical contact terminal, the method including: providing the device; providing the photovoltaic module; and mechanically engaging the device on the photovoltaic module with an elastic element for a releasable connection.

According to an embodiment, the photovoltaic module includes a back surface layer, in particular provided on the back electrode layer, wherein a back surface layer opening is formed in the back surface layer to provide access to at least one electrical contact terminal of the photovoltaic module, wherein the method further includes: arranging the device over the back surface layer opening in the back surface layer. Thus a simple automation of the mounting of the device may be realized.

Further aspects, advantages and features of the present invention are apparent from the claims, the description and the accompanying drawings.

### BRIEF DESCRIPTION OF THE DRAWINGS

A full and enabling disclosure including the best mode thereof, to one of ordinary skill in the art, is set forth more particularly in the remainder of the specification, including reference to the accompanying figures wherein:
Fig. 1 shows a schematical view of an arrangement of photovoltaic modules;
Fig. 2 shows a schematical cross-sectional view of an embodiment of a junction box arranged on a photovoltaic module;
Fig. 3 shows a cross-sectional top view of an embodiment of a junction box; and
Fig. 4 shows a flow chart of an embodiment of a method for mounting a junction box on a photovoltaic module.

### DETAILED DESCRIPTION

Reference will now be made in detail to the various embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

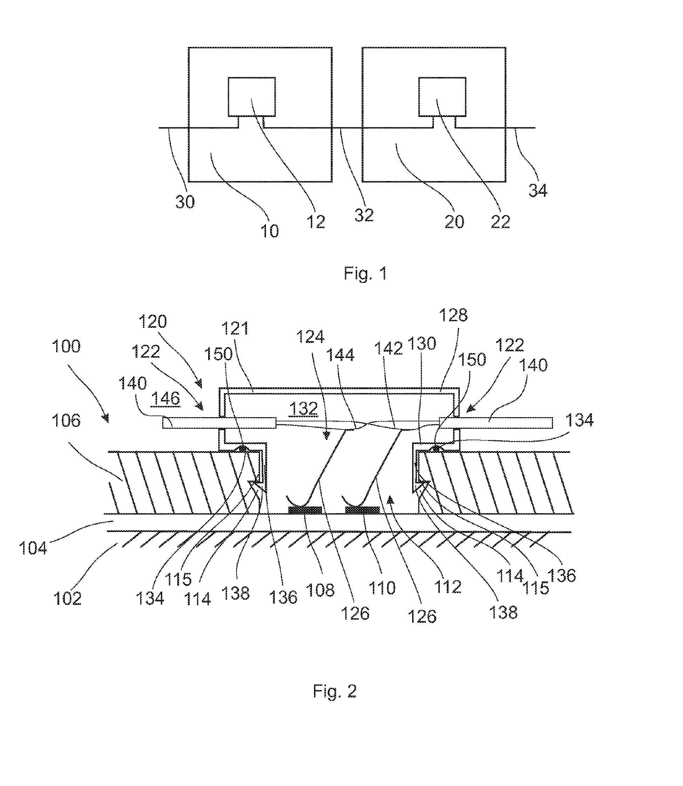

In Fig. 1, a first photovoltaic module 10 and a second photovoltaic module 20 are shown. On each of the photovoltaic modules, a junction box 12, 22 is mounted. Electric wires 30, 32 and 34 are connected to the junction box 12, 22 for connecting the wires electrically to the photovoltaic modules 10, 20. For example, the photovoltaic modules may be connected in series by the wires 30, 32, 34. In other embodiments, the photovoltaic modules 10, 20 may be connected in parallel. The number of photovoltaic modules 10, 20 may vary. Typically, the number of photovoltaic modules may depend on the space available to place the photovoltaic modules, the current needed, and financial aspects.

Fig. 2 shows a photovoltaic module 100 and a junction box 120 in a cross-section perpendicular to the back plane of the photovoltaic module. The photovoltaic module 100 includes a plurality of layers. In particular a raw module layer 102 including an active layer, for example a junction of photovoltaic cells of the photovoltaic module 100, which may generate a voltage on impact of electromagnetic radiation, a polyvinyl butyral (PVB) layer 104 and a back layer 106. In other embodiments, the number and the material of the layers 102, 104, 106 may vary. For example, the layer 104 may include other materials than PVB. In a typical embodiment, the raw module layer 102 may include one or more sublayers, for example the active layer, a front glass layer, and/or other layers. The number and the type of sublayers may depend on the type of photovoltaic module, or the type of photovoltaic cells. For example, thin film photovoltaic modules may be amorphous photovoltaic modules. Typically, an amorphous silicon thin film photovoltaic module may have the following sequence of layers in direction of the sun light: front glass layer, active layer (both may form the raw module layer 102), PVB layer 104, and a back glass layer 106, on which a junction box 120 is arranged.

On the PVB layer 104 two electrical terminals 108, 110 are disposed. The electrical terminals 108, 110 are connected to the junction or the active layer in the raw module layer 102 of the photovoltaic module 100. In an embodiment, the electrical terminals may be a metallic layer deposited on the PVB layer 104. For example, the electrical terminals 108, 110 may have a substantially rectangular form. The electrical connections to the junction of the photovoltaic cells of the photovoltaic module 100 are not shown in Fig. 2.

The back layer 106 may be, in an embodiment, a back glass layer 106. In other embodiments, the back layer 106 may include one or more sublayers. The back layer has an opening 112 to provide access to the electrical terminals 108, 110 which are provided on a layer of the photovoltaic module 100 beneath the back layer. Typically, the opening 112 of the back layer may be denominated as a cut-out of the photovoltaic module. Within the meaning of the present disclosure, the back layer 106 is a layer, which has an opening to provide access to electrical terminals disposed on a layer beneath the back layer. In a further embodiment, the back layer may have a plurality of openings, for example two openings, wherein each opening provides access to at least one electrical terminal. In other embodiments, only one electrical terminal or more than two electrical terminals may be disposed on the PVB layer 104. The number of electrical terminals may depend on the design of the photovoltaic cells of the photovoltaic module 100.

Further, the back layer 106 includes in an embodiment a plurality of recesses 114, in particular spaced apart recesses 114, to provide a location, where a latch of a releasable connection member may engage. For that purpose, the recesses 114 may have a hook-shaped form. In other embodiments, hook-shaped devices may be provided or fixed on the PVB layer 104 and/or the back layer 106.

The junction box 120 includes a hollow body 121, which has at least one first opening 122 for a wire 140 to be connected to the photovoltaic module 100. For example, the hollow body 121 may have two first openings 122. Typically, when a wire 140 is provided in the first openings 122, the exterior 146 of the junction box is sealed against the interior 132 of the junction box 120, such that no water can intrude into the interior 132 of the junction box 120 and deteriorate the electrical connection between the wire 140 and the electrical terminal 108, 110. For example, the at least one first opening may include a sealing material.

Further, the junction box 120 or the body 121 of the junction box 120 has a second opening 124 towards the photovoltaic module 100, in particular towards the opening 112 in the back layer 106 of the photovoltaic module 100, such that the interior of the junction box may be in fluid connection with the opening 112 in the back layer 106 of the photovoltaic module 100. In other embodiments, the junction box 120 may have more than one second opening, for example two or more second openings. For example, each second opening may be in fluid connection with a different opening in the back layer 106 of the photovoltaic module 100.

In an embodiment, at least one, for example two, electrical connection member 126 may extend through the second opening 124 of the junction box. In another embodiment, each electrical connection member 126 may extend through a separate second opening 124 of the junction box or the body 121 of the junction box 120. In Fig. 2 two electrical connection members 126 are shown which extend through a common second opening 124.

The electrical connection members 126 provide an elastic force in direction of the photovoltaic module 100. For example, the electrical connection members 126 may be a metallic spring element. Thus, when the junction box is fixed to the photovoltaic module, a good electrical contact is established between the electrical connection members 126 and the electrical terminals 108, 110.

Typically, the electrical connection members 126 are fixed to the body 121 or in fixed relationship to the body 121 of the junction box 120. For example, the electrical connection members 126 may be fixed by a screw, a rivet, and/or a snap-in connection to the body 121 of the junction box.

The wires 140 may include two conductors 142, 144 which are connected to the electrical connection members 126. For example, the connection may be provided by clamping, welding, brazing and/or a screw connection.

In other embodiments, which may be combined with other embodiments disclosed herein, electrical connection members may be fixed to the electrical terminals 108, 110 and/or be part of the electrical terminals, and respective electrical terminals, which are connected to the wires 140, and onto which the electrical connection members may contact, are provided by the junction box 120.

The body 121 of the junction box 120 includes a cover portion 128 which includes the first openings 122. As described above, the first openings 122 and the wire 140 are provided, such that the opening 122 is sealed.

In an embodiment, the body 121 of the junction box 120 includes a support surface 130 to be disposed on the back layer 106 of the photovoltaic module 100. For example, the support surface 130 is flat. In other examples, the support surface 130 may be adapted and/or conform to the back layer 106 of the photovoltaic module. Typically, the support surface 130 includes the at least one second opening 124 which provides access from the interior 132 of the junction box to the electrical contact terminals 108, 110 of the photovoltaic module 100, which are typically exterior to the interior space 132 of the junction box and in the opening of the back layer 106.

Further, a recess is provided on the lower or outer surface of the support surface to be directed to the back layer 106 of the photovoltaic module 100. The recess 134 is ring-shaped to provide a space for an O-ring 150. The O-ring recess 134 is formed, such that it surrounds the opening 112 in the back layer 106 of the photovoltaic module 100 and to surround the second opening 124 of the junction box 120. Thus, the O-ring 150 in the O-ring recess 134 provides a sealing against environmental impacts which are external to the junction box 120. In case the back layer 106 has more than one opening 112, and the support surface and/or the junction box may cover a plurality of openings 112 of the back layer 106, the O-ring recess 134 may be formed to surround the plurality of openings 112 and/or a plurality of second openings 124 of the junction box.

Typically, the O-ring recesses are provided such that a fluid is prevented from accessing the space provided by the interior 132 of the junction box and/or the at least one opening 112 of the back layer 106 covered by the junction box, through the space between the junction box 120, in particular the support surface 130 of the junction box, and the back layer 106, when an O-ring is provided in the O-ring recess and the junction box is fixed to the photovoltaic module 100.

In some embodiments, which may be combined with other embodiments, an O-ring recess may be disposed in the back layer 106 of the photovoltaic module surrounding at least one opening 112 of the back layer 106 or a plurality of openings 112 to be covered by a junction box.

Further, the junction box 120 includes at least one latching lug 136 which are elastic and include respectively a hook portion 138 which may engage the recesses 114 in the back layer 106, in particular in an opening surface 115, of the photovoltaic module 100. The latching lugs 136 may be elastically in a direction of a surface plane of the back layer 106 and/or of the support surface 130. The latching lugs 136 are fixed to the body 121 of the junction box 120. For example, in an embodiment, the latching lugs 136, the support surface 130 and the cover portion 128 are molded as a single piece, in particular from plastic. In other embodiments, the support surface and the cover portion may be molded as a single piece, in particular from plastic.

When the latching lugs are engaged in the recesses 114, the support surface 130 of the junction box 120 is pressed onto the back layer 106 and an O-ring 150 present in the O-ring recess 134 is compressed, such that the interior 132 of the junction box 122 and/or the opening 112 of the back layer 106 is hermetically sealed against the exterior 146 of a junction box.

In a typical embodiment, the support surface 130 may act as a stop with respect to latching lugs 136 of the junction box 120. Further, the electrical connection members 126 are pressed onto the electrical terminals 108, 110. Thus, a reliable electrical connection between the wire 140 and the terminals 108, 110 may be formed.

In other embodiments, the mechanical connection, in the form of the latching lug 136 and the recess 114, and the electrical connection, in the form of the elastic elements 126 and the terminals 108, 110, may be formed by a single element. For example, the electrical terminals may be formed to include a hook in which hook-shaped contact elements of the junction box may engage. Then, the hook shaped contact elements of the junction box may be fixed to the body of the junction box.

In a further embodiment, the recesses may be provided in the junction box for the mechanical connection of the junction box to the solar cell module and the latching lugs may be fixed to the photovoltaic module.

The elastic elements for a releasable connection of the junction box to the solar cell module 100 may be disposed and formed, such that a movement of the junction box 120 with respect to the solar cell module 100 is prevented. For example, the junction box may include at least two elastic elements for a releasable connection, such as the latching lugs. In other embodiments, the junction box may include at least four elastic elements for a releasable connection.

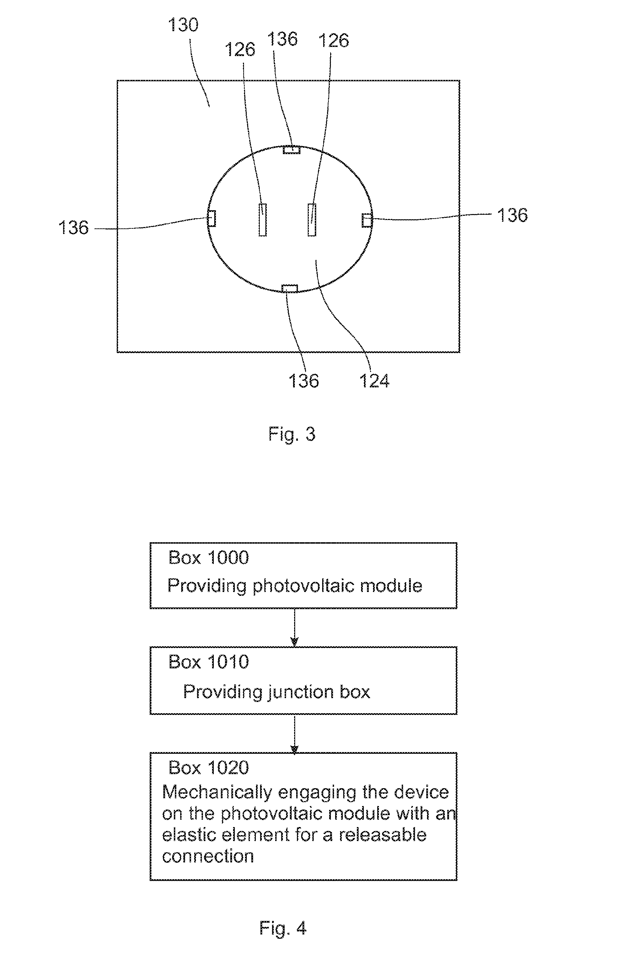

Fig. 3 shows a cross-sectional top view of a junction box of Fig. 2. The junction box includes four latching lugs 136 disposed at the circumference of a circular second opening 124. Thus, the junction box 120 is substantially immovable with respect to the photovoltaic module.

Thus, the present disclosure relates to a junction box which is based on a spring lock mounting technique which is made water-tight by an O-ring or other elastic sealant.

The spring lock snaps into an opening in the back glass of the photovoltaic module. By pressing the O-ring or sealant during the mounting process a force is accumulated, which, after locking of the spring lug, gives a water-tight seal between the junction box and the back glass of the photovoltaic module. The back glass may have a circular opening and the spring lock adapter may be also circular. The O-ring is located between the back glass and the junction box frame. The junction box frame may be a plastic part.

Furthermore, the electrical contacts between the junction box and the bus wire is provided by spring contacts. Therefore, no soldering or crimping is to provide the contact. This provides for an easy mounting automated installation.

Typically, the advantages are that the junction box may be easily placed in an automatic assembly process, further, that the junction box is water-tight. Additionally, the mounting of the junction box can be quickly processed. Further, no soldering or no gluing or hot melt is needed to attach the junction box to the photovoltaic module.

In Fig. 4 a flow chart of a method for mounting a junction box is shown. First, a junction-box and a photovoltaic module are provided in Box 1000 and Box 1010. The sequence of providing the junction-box and the photovoltaic module is arbitrary. Then, in Box 1020, the device is mechanically engaged on the photovoltaic module with an elastic element for a releasable connection. Embodiments of the method may include an O-ring, which is disposed in an O-ring recess of the junction box.

This written description uses examples to disclose the invention, including the best mode, and also enables any person skilled in the art to practice the described subject-matter, including making and using any devices or systems and performing any incorporated methods. While various specific embodiments have been disclosed in the foregoing, those skilled in the art will recognize that the spirit and scope of the claims allow for equally effective modifications. Especially, mutually non-exclusive features of the embodiments described above may be combined with each other. The patentable scope is defined by the claims, and may include such modifications and other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A device (12, 22, 120) for providing a housing for an electrical connection between electrical contact terminals (108, 110) of a photovoltaic module (100) and at least one cable (140, 142, 144), comprising
at least one elastic element (136) for a releasable connection for connecting and retaining the device to the photovoltaic module.

2. The device according to claim 1, wherein
the device includes a circumferential recess (134) for an O-ring (150) for sealing at least one of the interior (132) of the device, the electrical contact terminals (108, 110), or a cut out (112) of the photovoltaic module from the exterior of the device.

3. The device according to one of the preceding claims, wherein
the at least one elastic element is an element of a pair of mating catches (114, 136, 138), in particular selected of the group consisting of: a catch, a catch recess, a latching lug, and a latch recess.

4. The device according to one of the preceding claims, further comprising a support surface (130), in particular a substantially planar support surface, the support surface having at least one opening (124), wherein the releasable connection member is connected to the support surface.

5. The device according to claim 4, wherein
the at least one releasable connection member is adapted for a connection to the photovoltaic module through the at least one opening.

6. The device according to claim 4 or 5, wherein
the recess (134) for the O-ring is arranged in the support surface.

7. The device according to one of the claims 4 to 6, further comprising at least one electrical spring contact element (126), in particular at least two electrical spring contact elements, for connecting a wire (142, 144) to a contact terminal (108, 110) of the photovoltaic module through the at least one opening.

8. A photovoltaic module assembly (100, 120) comprising:
a photovoltaic module (100) comprising at least one electrical contact terminal (108, 110) and at least one releasable connection member (114); and
a device (120) for providing a housing for an electrical connection between the at least one electrical contact terminals and at least one cable, including at least one releasable connection member (136, 138) for connecting and retaining the device to the photovoltaic module; wherein
the at least one releasable connection member of the photovoltaic module cooperates with the releasable connection member of the device for retaining the device on the photovoltaic module.

9. The photovoltaic module assembly according to claim 8, further comprising
a back surface layer (106); and
a back surface layer opening (112) formed in the back surface layer to provide access to the at least one electrical contact terminal (108, 110) of the photovoltaic module, wherein the device covers the back surface layer opening.

10. The photovoltaic module assembly according to claim 9, wherein
the back surface layer opening (112) has an opening surface, wherein the opening surface includes the at least one releasable connection member of the photovoltaic module, wherein, in particular, the at least one releasable connection member is at least one recess and/or protrusion to provide a female portion of a snap-in connection and/or a hook for a snap-in connection.

11. The photovoltaic module assembly according to one of the claims 9 or 10, wherein a circumferential recess (134) formed in the support surface (130) of the device surrounds the back surface layer opening.

12. The photovoltaic module assembly according to claim 11, further comprising: an O-ring (150) disposed in the circumferential recess of the device.

13. The photovoltaic module assembly according to one of the claims 8 to 12, wherein the at least one releasable connection member of the device and the at least one releasable connection member of the photovoltaic module engage each other respectively, so that the support surface (130) of the device is pressed onto the back surface layer (106) of the photovoltaic module and/or an electrical connection between the at least one electrical contact element (126)of the device and the at least one electrical contact terminal (108, 110) is provided.

14. A method for mounting a device for providing a housing for an electrical connection between at least one electrical contact terminal (108, 110) of a photovoltaic module and at least one cable (140, 142, 144) on a photovoltaic module comprising the at least one electrical contact terminal, the method comprising:
providing the device (120);
providing the photovoltaic module (100); and
mechanically engaging the device on the photovoltaic module with an elastic element for a releasable connection.

15. The method according to claim 14, wherein
the photovoltaic module includes a back surface layer (106), wherein a back surface layer opening (112) is formed in the back surface layer to provide access to at least one electrical contact terminal (108, 110) of the photovoltaic module, wherein the method further comprises:
arranging the device over the back surface layer opening in the back surface layer.
